# EUROPEAN PATENT SPECIFICATION

(11) **EP 4 559 763 B1**
(45) Date of publication and mention of the grant of the patent: **22.07.2026**
(21) Application number: 22952681.9
(22) Date of filing: 07.09.2022
(51) Int. Cl.: B60S 1/50, B60S 1/48, F04B 53/00

(54) **CLEANING SYSTEM USED FOR VEHICLES AND CAPABLE OF SUPPRESSING VIBRATIONS AND REDUCING NOISE**
REINIGUNGSSYSTEM FÜR FAHRZEUGE MIT FÄHIGKEIT ZUR UNTERDRÜCKUNG VON VIBRATIONEN UND ZUR GERÄUSCHREDUZIERUNG
SYSTÈME DE NETTOYAGE UTILISÉ POUR DES VÉHICULES ET POUVANT SUPPRIMER DES VIBRATIONS ET RÉDUIRE LE BRUIT

(30) Priority: 24.07.2022 CN 202210873503
(43) Date of publication of application: 28.05.2025
(73) Proprietor: Ningbo Hengshuai Co., Ltd., Ningbo, Zhejiang 315032 (CN)
(72) Inventor: XU, Hengshuai, Ningbo, Zhejiang 315032 (CN); FENG, Cijin, Ningbo, Zhejiang 315032 (CN); ZENG, Lihong, Ningbo, Zhejiang 315032 (CN); LIU, Peihai, Ningbo, Zhejiang 315032 (CN)
(74) Representative: Murgitroyd & Company
(86) International application number: PCT/CN2022/117673
(87) International publication number: WO 2024/021240

(56) References cited:
- WO-A1-99/28632
- CN-A- 102 327 878
- CN-A- 104 670 168
- CN-A- 106 167 001
- CN-A- 112 810 572
- CN-A- 112 810 572
- CN-A- 112 977 347
- CN-U- 201 559 626
- DE-U1- 202020 104 682
- JP-A- 2003 237 545
- JP-A- 2004 322 853
- KR-A- 20030 033 166

## Description

### TECHNICAL FIELD

The present disclosure relates to a cleaning system used for vehicles, and in particular to a cleaning system used for vehicles and capable of suppressing vibrations and reducing noise.

### BACKGROUND

With the continuous development and progress of the automobile industry, assisted driving and intelligent driving technologies have gradually begun to be applied. More and more cameras, sensors and laser radars need to be installed outside the vehicle body. Since these devices installed outside the vehicle body are exposed to the outside, small flies, dust, mud or ice and snow attached to them will affect the perception ability of these devices and reduce the accuracy of data collection. For assisted driving and automatic driving vehicles that are driven on the road, if these devices are contaminated and cannot be discovered and cleaned quickly, the collected data will be reduced in accuracy, which will affect the control of the vehicle and even endanger driving safety in serious cases. Since the cleaning system needs to spray cleaning liquid to these devices with high pressure and large flow rate to achieve the cleaning effect, the cleaning pump needs to rotate at high speed to provide power. The vibration generated by the high-speed rotating cleaning pump will be transmitted to the cleaning liquid tank, and such vibration will be further amplified by the cleaning liquid tank to cause greater vibration and noise, directly affecting the comfort of the driver and passengers, which is unacceptable. Therefore, it is urgent to design a vehicle cleaning system that can suppress vibration and reduce noise, so as to meet the comfort requirements of the vehicle. CN-A-112810572 shows the preamble of claim 1.

### SUMMARY

### Technical Problem

The technical problem to be solved by the present disclosure is to overcome the above-mentioned deficiencies of the prior art and provide a vibration-suppressing and noise-reducing vehicle washing system (a cleaning system used for vehicles and capable of suppressing vibrations and reducing noise), so that it can better suppress the vibration of the washing system, thereby reducing vibration and noise.

### Solutions to the Problem

### Technical Solutions

The technical solutions adopted by the present disclosure to solve the above-mentioned technical problem are:
A cleaning system used for vehicles and capable of suppressing vibrations and reducing noise, comprising a cleaning liquid tank, a cleaning pump, an elastic positioning sleeve and an elastic sealing ring, wherein a lower portion of the cleaning liquid tank is provided with an upward liquid outlet; a limiting plate is provided on a side surface of the cleaning liquid tank, and the limiting plate is opposite the liquid outlet; an engagement slot is provided in the limiting plate; a sealing hole is provided in the center of the sealing ring, and the sealing ring is fixed to the liquid outlet; a liquid intake nozzle is arranged at one end of the cleaning pump and inserted into the sealing hole of the sealing ring, an end face of the cleaning pump abuts against a surface of the sealing ring to axially position the cleaning pump; an elastic positioning member is arranged on a top cover of the cleaning pump; a positioning hole, which corresponds to the elastic positioning member, is provided in the center of the elastic positioning sleeve, so that the elastic positioning sleeve is fixed to the elastic positioning member; a plurality of vibration suppression holes are provided at intervals in the elastic positioning sleeve on the periphery of the positioning hole; the bottom of the elastic positioning sleeve is provided with an edge; and the elastic positioning sleeve is configured to sleeve the elastic positioning member, so as to be fixed to the elastic positioning member, and the elastic positioning sleeve engages with the engagement slot in the limiting plate, so that the edge is axially limited by the bottom surface of the limiting plate, and the outer periphery of the elastic positioning sleeve engages with an engagement portion on the engagement slot, so as to fix the cleaning pump.

According to some embodiments of the present disclosure, the engagement slot of the limiting plate comprises an engagement socket and a plurality of arc-shaped engagement portions that cooperate with the outer periphery of the elastic positioning sleeve, and the positioning sleeve is radially limited by the arc-shaped engagement portions, so as to better fix the cleaning pump.

According to some embodiments of the present disclosure, a vibration-suppressing slot is provided between two adjacent engagement portions of the limiting plate, and the periphery of the vibration-suppressing slot does not contact the outer periphery of the positioning sleeve, so that the vibration suppression and noise reduction effect of the positioning sleeve is better.

According to some embodiments of the present disclosure, avoidance slots are respectively provided on both sides of the engagement socket.

According to some embodiments of the present disclosure, an axial opening slot is provided in the elastic positioning member (elastic positioning column), so that the positioning column can be pressed at the part of the opening slot and move inward, making it radially elastic, thereby facilitating the installation of the positioning sleeve on the positioning column and the installation of the positioning sleeve into the limiting plate, and having better assemblability.

According to some embodiments of the present disclosure, the elastic positioning member (elastic positioning column) is provided with a cylindrical hole at its center, so that the wall thickness of the positioning column is uniform, and it has better molding processability, and avoids shrinkage deformation.

According to some embodiments of the present disclosure, the elastic positioning member is cylindrical, and the elastic positioning sleeve is cylindrical.

According to some embodiments of the present disclosure, a first vibration-suppressing hollow ring is arranged on the outer periphery of the sealing hole at a lower end of the elastic sealing ring. Such a sealing ring has better vibration-damping and noise-proof effects.

According to some embodiments of the present disclosure, a second vibration-suppressing hollow ring is arranged on the outer periphery of the sealing hole at a fixing surface of the elastic sealing ring, and a plurality of vibration-suppressing strips are arranged in the second vibration-suppressing hollow ring. Such a sealing ring has better vibration-damping and noise-proof effects.

According to some embodiments of the present disclosure, the elastic sealing ring is provided with an annular groove, and the annular groove is buckled into the edge of the liquid outlet for fixing, so that the fixing is firm.

According to some embodiments of the present disclosure, a round table surface is provided on the outer circle of the lower part of the sealing ring, so that the sealing ring is conveniently installed in the mounting hole of the cleaning liquid tank, having better assemblability.

### Beneficial Effects of the Present Disclosure

### Beneficial Effects

Compared with the prior art, the advantage of the present disclosure is that: by providing a positioning sleeve and a sealing ring of a special structure between the cleaning liquid tank and the cleaning pump, the vibration generated by the high-speed rotation of the cleaning pump during operation is damped by the positioning sleeve and the sealing ring, and the vibration transmitted to the cleaning liquid tank by the cleaning pump is weakened, thereby reducing the vibration and noise caused by the further amplification of the cleaning liquid tank, and preventing noise interference to the driver and passengers and affecting comfort.

### BRIEF DESCRIPTION OF THE DRAWINGS

### Description of the Drawings

Figure 1 is a stereoscopic view of a vibration-suppressing and noise-reducing vehicle washing system (a cleaning system used for vehicles and capable of suppressing vibrations and reducing noise) according to an embodiment of the present disclosure.
Figure 2 is a partially enlarged cross-sectional view of Figure 1 along A-A.
Figure 3 is a schematic view of a decomposed vibration-suppressing and noise-reducing vehicle washing system according to an embodiment of the present disclosure.
Figure 4 is a front view of a cleaning liquid tank according to an embodiment of the present disclosure.
Figure 5 is a partially enlarged cross-sectional view of Figure 4 along B-B.
Figure 6 is a partially enlarged cross-sectional view of Figure 4 along C-C.
Figure 7 is a schematic structural view of a cleaning pump according to an embodiment of the present disclosure.
Figure 8 is a schematic structural view of a positioning sleeve according to an embodiment of the present disclosure.
Figure 9 is a schematic structural view of a sealing ring according to an embodiment of the present disclosure.
Figure 10 is a schematic structural view of a positioning column and a positioning sleeve according to another embodiment of the present disclosure.
Figure 11 is a schematic structural view of a positioning column and a positioning sleeve in another embodiment of the present disclosure.
Figure 12 is a schematic structural view of a positioning column and a positioning sleeve in a further embodiment of the present disclosure.

### DETAILED DESCRIPTION OF EMBODIMENTS

### Implementation Mode of the Present disclosure

The present disclosure will be further described below in conjunction with the accompanying drawings and embodiments.

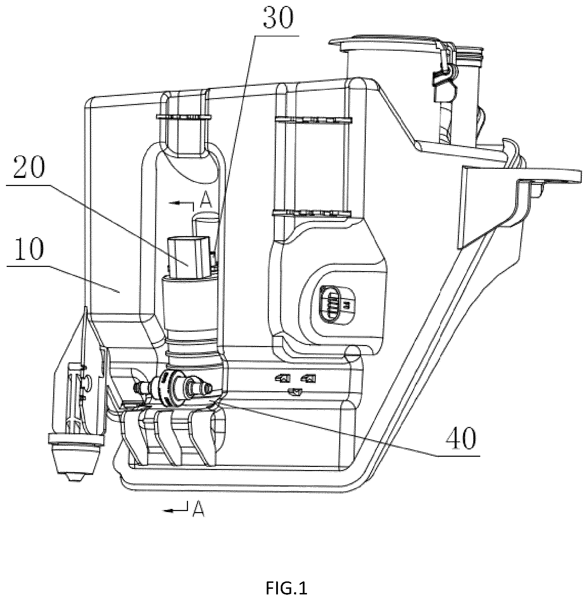

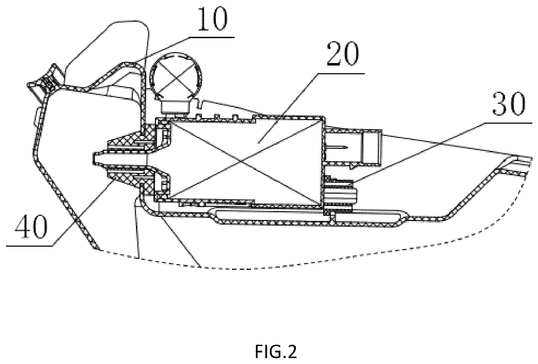

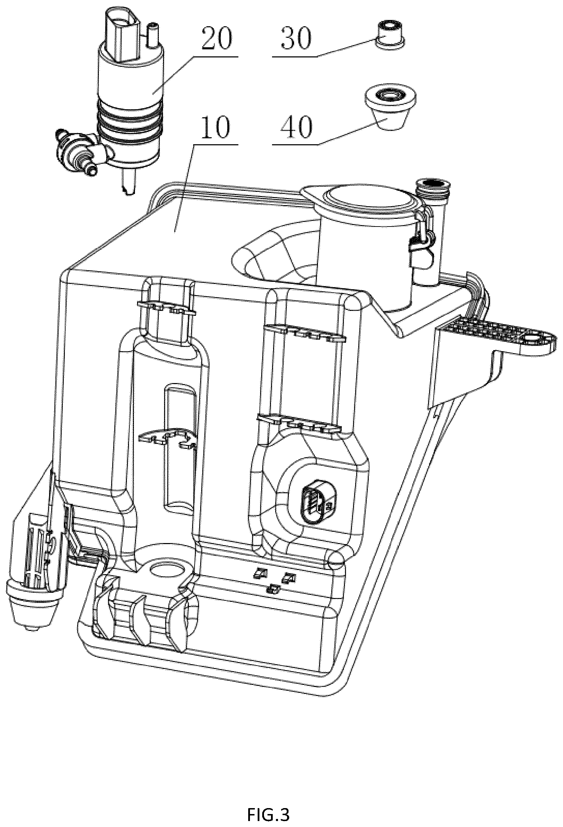

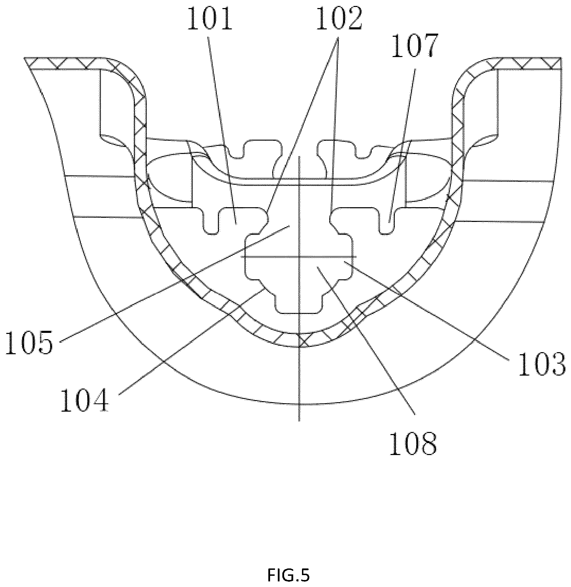

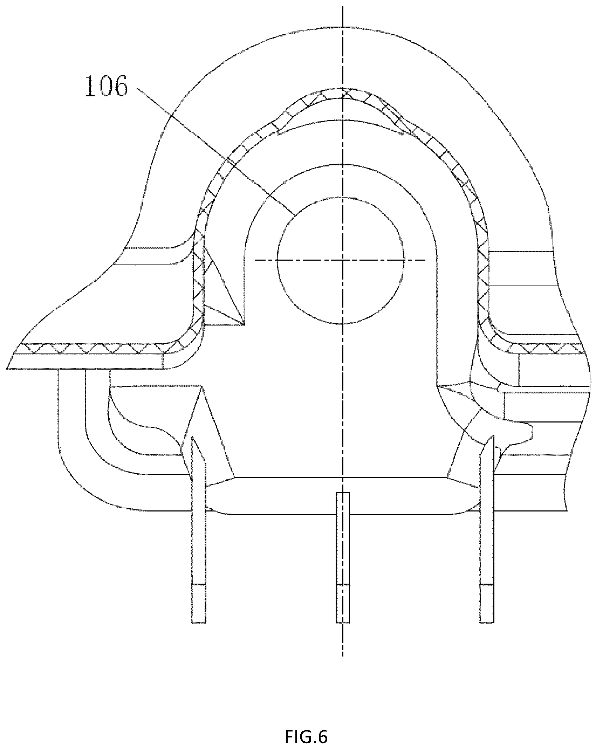

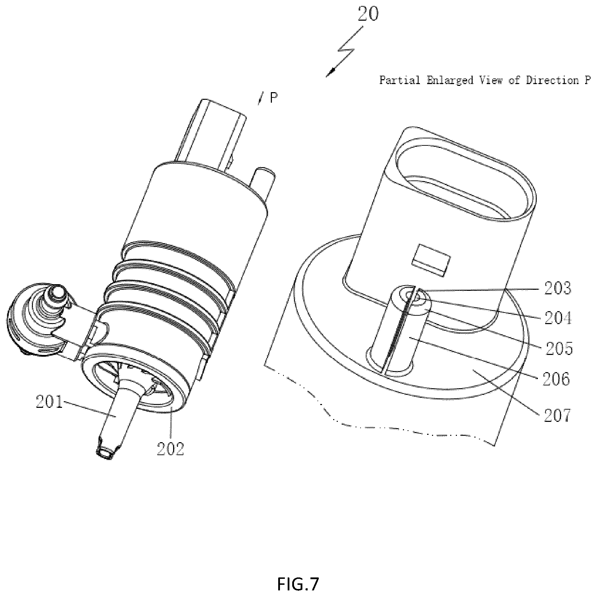

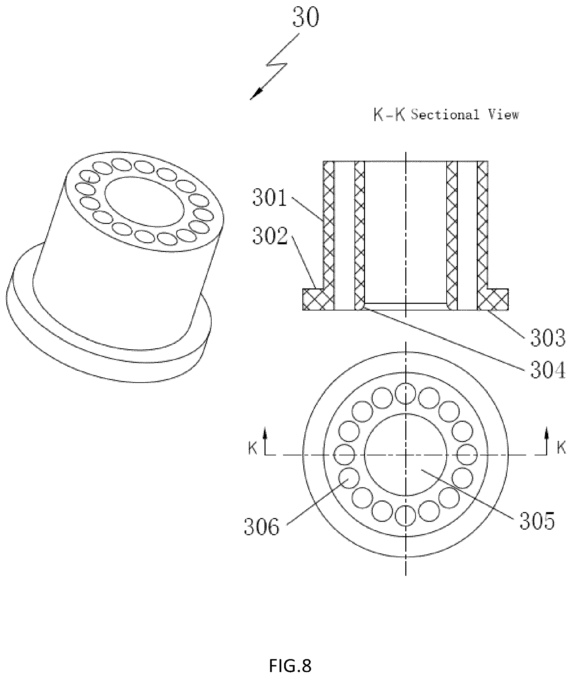

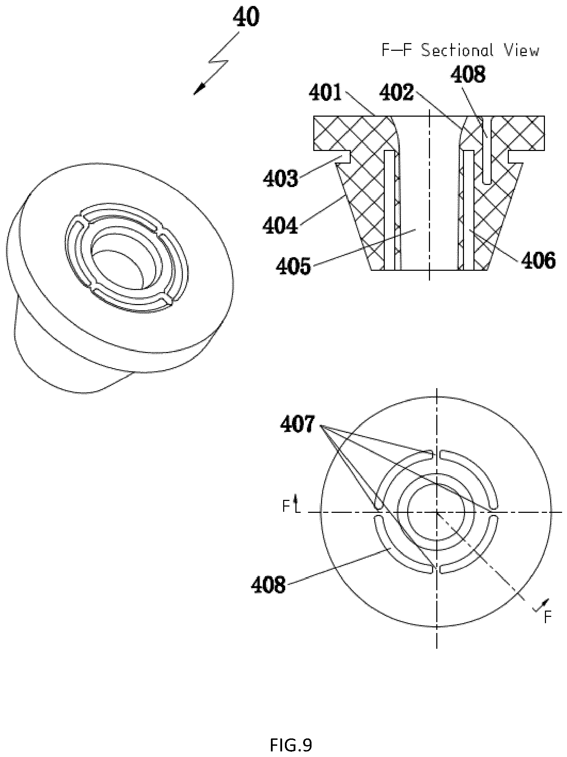

As shown in Figures 1-9, a vibration-suppressing and noise-reducing vehicle cleaning system (a cleaning system used for vehicles and capable of suppressing vibrations and reducing noise) comprises a cleaning liquid tank 10, a cleaning pump 20, an elastic positioning sleeve 30 and an elastic sealing ring 40.

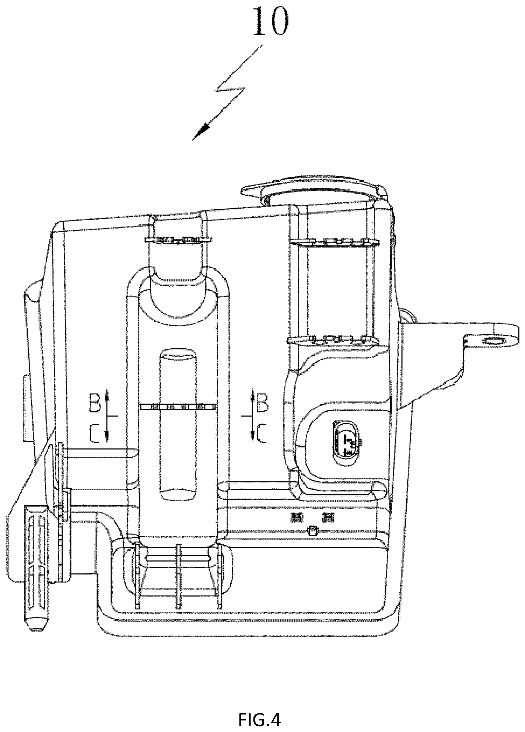

As shown in Figures 4-9, an upward mounting hole 106 (liquid outlet) is provided at the lower part of the cleaning liquid tank 10, the mounting hole cooperates with the annular groove 403 of the sealing ring 40, and the annular groove 403 is buckled into the edge of the mounting hole 106 to fix the sealing ring 40 on the lower part of the cleaning liquid tank 10.

A limiting plate 101 is arranged on the side wall of the cleaning liquid tank 10. The limiting plate 101 is opposite to the mounting hole 106 (liquid outlet). An engagement slot 108 is arranged in the limiting plate 101. The engagement slot 108 includes an engagement socket 105 and a plurality of engagement portions that cooperate with the outer periphery of the positioning sleeve. In this embodiment, the arc-shaped engagement portions 104 are provided. The positioning sleeve 30 can be installed into the engagement slot 108 of the limiting plate 101 from the engagement socket 105, and the positioning sleeve 30 is radially limited by the arc-shaped engagement portions 104, and the bottom edge of the positioning sleeve 30 is pressed by the bottom surface of the limiting plate 101 to limit the axial position, so as to limit the cleaning pump 20 and prevent the cleaning pump 20 from loosening.

A vibration-suppressing slot 103 is also provided between the adjacent arc-shaped engagement portions 104, and the edge of the vibration-suppressing slot 103 does not contact the outer periphery 301 of the positioning sleeve, so that the vibration suppression and noise reduction effect of the positioning sleeve 30 can be better.

Avoidance slots 107 are respectively provided on both sides of the above-mentioned engagement socket 105, so that it is more convenient to buckle the positioning sleeve 30 through the engagement socket, and the positioning sleeve 30 is reset faster after being buckled into the engagement socket 105, and the positioning sleeve 30 can be better fixed.

A transition arc 102 is provided at the engagement socket 105 of the above-mentioned limiting plate 101, and the sleeve body 301 of the positioning sleeve 30 is easily clamped along the transition arc 102, which facilitates the assembly of the positioning sleeve 30 into the limiting plate 101 and improves the assemblability.

The cleaning pump 20 is provided with a positioning column 206 on the upper end cover 207. In this embodiment, the positioning column 206 is a cylinder, which cooperates with the positioning hole 305 of the positioning sleeve 30. The positioning sleeve 30 is configured to sleeve the positioning column and fixed on the positioning column 206 through the positioning hole 305.

The positioning column 206 is also provided with an opening slot/groove 203 in a vertical direction, so that the positioning column 206 has elasticity in the radial direction, which is convenient for the positioning sleeve 30 to be installed on the positioning column 206, and also convenient for the positioning sleeve 30 to be installed in the limiting plate 101. In this way, the assembly performance is better.

The positioning column 206 is provided with a cylindrical hole 204 at its center, so that the wall thickness of the positioning column 206 is uniform, has better molding processability, and avoids shrinkage deformation.

The positioning column 206 is provided with a transition arc surface 205 at its end, which is convenient for the positioning sleeve 30 to be installed along the transition arc surface 205.

The positioning sleeve 30 is made of elastic material. In this embodiment, the main body of the positioning sleeve 30 is a cylinder, and a cylindrical positioning hole 305 is arranged at the center thereof to cooperate with the positioning column 206. A plurality of vibration-suppressing holes 306 are evenly arranged at intervals along the circumference of the body of the positioning sleeve between the circumference of the cylindrical positioning hole 305 and the outer cylindrical surface 301, and an annular edge 307 is arranged at the bottom of the positioning sleeve 30.

A transition arc surface 304 is arranged at the mouth of the positioning hole 305 to facilitate the insertion of the positioning sleeve 30 on the positioning column 206.

When the positioning sleeve 30 is buckled into the engagement slot of the limiting member, the outer cylindrical surface 301 is clamped by the plurality of arc-shaped engagement portions 104, the mounting surface 303 of the edge 307 is attached to the end cover surface 207 of the cleaning pump 20, and the positioning surface 302 is limited by the bottom surface of the limiting plate 101, thereby fixing and limiting the cleaning pump 20.

The sealing ring 40 is made of elastic material, and its upper end surface 401 is set as a fixing surface to axially position the bottom surface 202 of the pump cover that is set at the side of the liquid intake nozzle 201 on the cleaning pump 20.

The sealing ring 40 is provided with a sealing hole 405 in the center to seal the liquid intake nozzle 201 set in the cleaning pump 20 and fix the liquid intake nozzle 201.

The sealing ring 40 is provided with a second vibration-suppressing hollow ring 408 on the outer periphery of the sealing hole 405 at a fixing surface 401 of the sealing ring, and a plurality of vibration-suppressing strips 407 are provided in the second vibration-suppressing hollow ring 408 to separate the second hollow ring 408 into multiple sections, and a first vibration-suppressing hollow ring 406 is provided on the outer periphery of the sealing hole 405 at the lower end thereof to achieve the effect of vibration damping and noise reduction.

The sealing hole 405 of the sealing ring 40 is provided with a transition arc surface 402, which facilitates the insertion of the liquid intake nozzle 201 of the cleaning pump 20 into the sealing hole 405, thereby improving the assemblability.

The lower outer circle of the sealing ring 40 is provided with a round table surface 404, which facilitates the installation of the sealing ring 40 into the mounting hole 106 of the cleaning liquid tank 10, so as to improve the assemblability.

The above-mentioned vehicle cleaning system can be conveniently installed in the following order: first install the sealing ring 40 on the mounting hole 106 of the cleaning liquid tank 10, install the positioning sleeve 30 on the positioning column 206 of the cleaning pump 20, and then insert the liquid intake nozzle 201 of the cleaning pump 20 into the sealing hole 405 of the sealing ring 40, and then clamp the positioning sleeve 30 into the engagement slot of the limiting plate 101 of the cleaning liquid tank 10 to fix the cleaning pump 20.

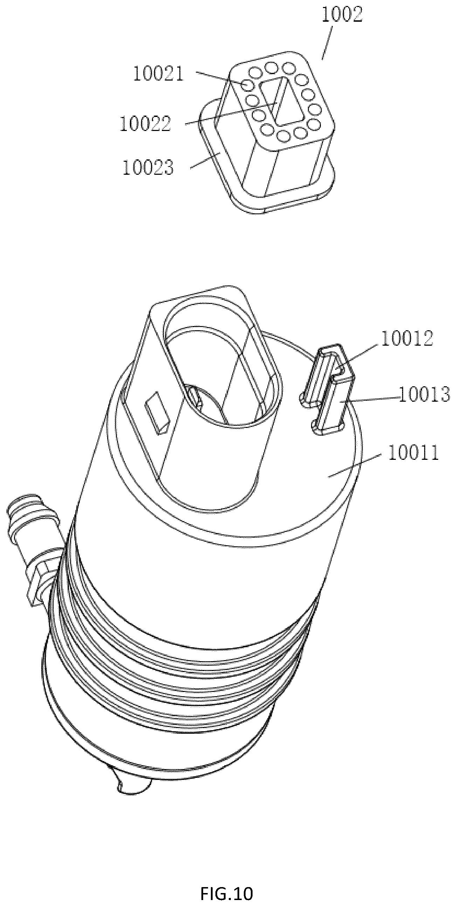

As shown in FIG. 10, a positioning member and a positioning sleeve of another embodiment are shown. The positioning sleeve 1002 is a quadrilateral, and a quadrilateral hole 10022 is arranged inside it. Spaced vibration-suppressing holes 10021 are arranged outside the quadrilateral hole 10022, and a quadrilateral edge 10023 is arranged on the bottom edge. A quadrilateral column 10013 is arranged on the top surface of the cleaning pump 10011 to install the positioning sleeve 1002. The quadrilateral column 10013 is consistent with the quadrilateral hole 10022. The positioning sleeve 1002 can be fixed on the positioning column 10013. Moreover, a groove/slot 20012 is arranged in the quadrilateral of the positioning column 10013 of this embodiment, so that it is more convenient to install the positioning sleeve 1002.

Similarly, an engagement slot (not shown) matching the positioning sleeve 1002 can be provided in the limiting plate of the cleaning liquid tank, so that the outer periphery of the positioning sleeve 1002 is limited by the engagement slot, and the quadrilateral edge 10023 is limited by the bottom surface of the limiting plate, thereby fixing and limiting the cleaning pump 20. In this way, the vibration suppression and noise reduction effect can also be achieved.

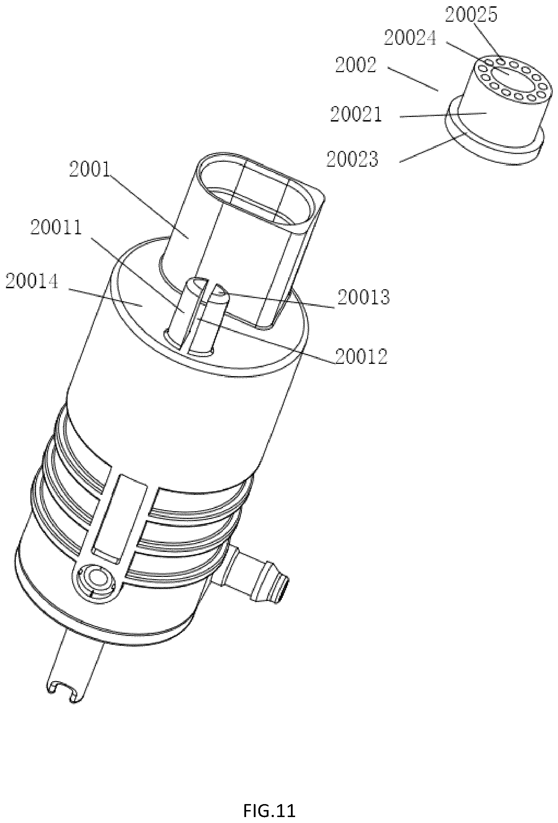

As shown in FIG. 11, it shows a positioning member and a positioning sleeve of another embodiment, the positioning sleeve 2002 is an elliptical cylinder, an elliptical cylinder hole 20024 is provided inside it, and spaced vibration-suppressing holes 20025 are provided outside the elliptical cylinder hole 20024, and an elliptical cylinder edge 20023 is provided on the bottom edge. An elliptical cylinder 20011 for installing the positioning sleeve 2002 is provided on the cleaning pump 2001, and the elliptical hole (elliptical cylinder hole) 20024 is just set on the elliptical cylinder 20011 to tightly fix the positioning sleeve 2002 on the elliptical cylinder 20011.

Similarly, an engagement slot (not shown) matching the positioning sleeve can be provided on the limiting plate of the cleaning liquid tank, so that the outer periphery 20021 of the positioning sleeve 2002 is limited by the engagement slot, and the elliptical cylindrical edge 20023 is limited by the bottom surface of the limiting plate, thereby fixing and limiting the cleaning pump 20. In this way, it can also achieve the effect of vibration suppression and noise reduction.

An opening slot 20012 in the vertical direction is also set in the positioning column 20011, so that the positioning column 20011 has radial elasticity, which is convenient for the positioning sleeve 2002 to be installed on the positioning column 20024, and also convenient for the positioning sleeve 2002 to be installed in the limiting plate. In this way, the assembly is better.

An elliptical cylinder hole 20013 is also set at the center of the positioning column 20024, so that the wall thickness of the positioning column 20024 is uniform, having better molding processability and avoiding shrinkage deformation.

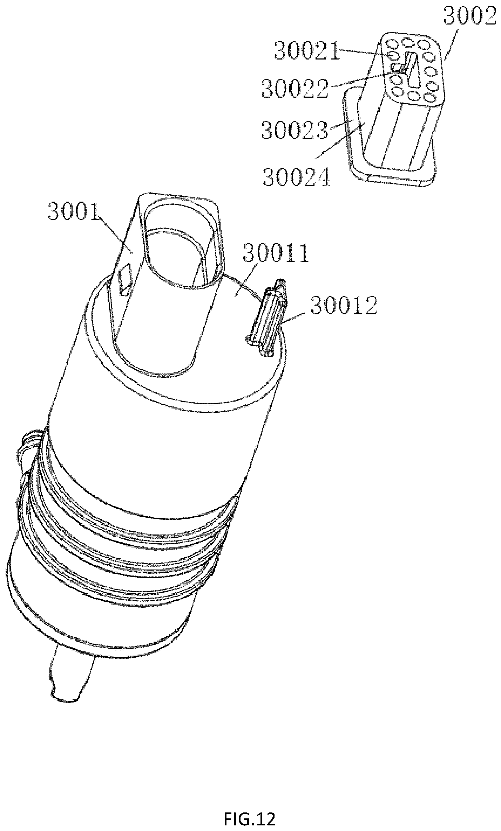

As shown in FIG. 12, a positioning column and a positioning sleeve of another embodiment are shown. The positioning sleeve 3002 is designed as a quadrilateral, a T-shaped hole 30022 is arranged inside the positioning sleeve, and spaced vibration-suppressing holes 30021 are arranged outside the T-shaped hole 30022. A quadrilateral edge 30023 is arranged on the bottom edge. A T-shaped column 30012 for installing the positioning sleeve 3002 is arranged on the end cover surface 30011 of the cleaning pump 3001. The T-shaped hole 30022 is just set on the T-shaped column 30012 to tightly fix the positioning sleeve 3002 on the T-shaped column 30012.

Similarly, an engagement slot (not shown) matching the positioning sleeve is provided on the limiting plate of the cleaning liquid tank, so that the outer periphery 30024 of the positioning sleeve 3002 is limited by the engagement slot, and the quadrilateral edge 30023 is limited by the bottom surface of the limiting plate, thereby fixing and limiting the cleaning pump, and also achieving the effect of vibration suppression and noise reduction.

In summary, the positioning sleeve and the positioning column can also be changed in shape and structure according to the technical concept and inventive essence of the present disclosure.

## Claims

1. A cleaning system used for vehicles and capable of suppressing vibrations and reducing noise, comprising a cleaning liquid tank (10), a cleaning pump (20), an elastic positioning sleeve (30) and an elastic sealing ring (40) wherein a lower portion of the cleaning liquid tank is provided with an upward liquid outlet; a limiting plate (101) is provided on a side surface of the cleaning liquid tank, and the limiting plate is opposite the liquid outlet; an engagement slot (108) is provided in the limiting plate; a sealing hole (405) is provided in the center of the sealing ring and the sealing ring is fixed to the liquid outlet; a liquid intake nozzle is arranged at one end of the cleaning pump and inserted into the sealing hole of the sealing ring, an end face of the cleaning pump abuts against a surface of the sealing ring to axially position the cleaning pump; the system being further **characterized by** comprising an elastic positioning member (206) being arranged on a top cover of the cleaning pump; a positioning hole (305) which corresponds to the elastic positioning member, is provided in the center of the elastic positioning sleeve, so that the elastic positioning sleeve is fixed to the elastic positioning member; a plurality of vibration suppression holes (306) are provided at intervals in the elastic positioning sleeve on the periphery of the positioning hole; the bottom of the elastic positioning sleeve is provided with an edge; and the elastic positioning sleeve is configured to sleeve the elastic positioning member, so as to be fixed to the elastic positioning member, and the elastic positioning sleeve engages with the engagement slot in the limiting plate, so that the edge is axially limited by the bottom surface of the limiting plate, and the outer periphery of the elastic positioning sleeve engages with an engagement portion on the engagement slot, so as to fix the cleaning pump.

2. The cleaning system used for vehicles and capable of suppressing vibrations and reducing noise according to claim 1, wherein the engagement slot of the limiting plate comprises an engagement socket (105) and a plurality of arc-shaped engagement portions (104) that cooperate with the outer periphery of the elastic positioning sleeve, and the positioning sleeve is radially limited by the arc-shaped engagement portions.

3. The cleaning system used for vehicles and capable of suppressing vibrations and reducing noise according to claim 1, wherein a vibration-suppressing slot (103) is provided between two adjacent engagement portions of the limiting plate, and the periphery of the vibration-suppressing slot does not contact the outer periphery of the positioning sleeve.

4. The cleaning system used for vehicles and capable of suppressing vibrations and reducing noise according to claim (2) , wherein avoidance slots (107) are respectively provided on both sides of the engagement socket.

5. The cleaning system used for vehicles and capable of suppressing vibrations and reducing noise according to claim 1, wherein an axial opening slot (203) is provided in the elastic positioning member.

6. The cleaning system used for vehicles and capable of suppressing vibrations and reducing noise according to claim 1, wherein the elastic positioning member is provided with a cylindrical hole (204) at its center.

7. The cleaning system used for vehicles and capable of suppressing vibrations and reducing noise according to claim 1, wherein the elastic positioning member is cylindrical, and the elastic positioning sleeve is cylindrical.

8. The cleaning system used for vehicles and capable of suppressing vibrations and reducing noise according to claim 1, wherein a first vibration-suppressing hollow ring (406) is arranged on the outer periphery of the sealing hole at a lower end of the elastic sealing ring.

9. The cleaning system used for vehicles and capable of suppressing vibrations and reducing noise according to claim 1, wherein a second vibration-suppressing hollow ring (408) is arranged on the outer periphery of the sealing hole at a fixing surface of the elastic sealing ring, and a plurality of vibration-suppressing strips (407) are arranged in the second vibration-suppressing hollow ring.

10. The cleaning system used for vehicles and capable of suppressing vibrations and reducing noise according to claim 1, wherein the elastic sealing ring is provided with an annular groove (403) and the annular groove is buckled into the edge of the liquid outlet for fixing.

## Patentansprüche

1. Reinigungssystem für Fahrzeuge zur Schwingungsdämpfung und Geräuschminderung, umfassend einen Reinigungsflüssigkeitsbehälter (10), eine Reinigungspumpe (20), eine elastische Positionierhülse (30) und einen elastischen Dichtring (40), wobei an einem unteren Abschnitt des Reinigungsflüssigkeitsbehälters ein nach oben gerichteter Flüssigkeitsauslass vorgesehen ist; wobei an einer Seitenfläche des Reinigungsflüssigkeitsbehälters eine Begrenzungsplatte (101) vorgesehen ist und die Begrenzungsplatte dem Flüssigkeitsauslass gegenüberliegt; wobei in der Begrenzungsplatte eine Eingriffsnut (108) vorgesehen ist; wobei in der Mitte des Dichtrings eine Dichtungsöffnung (405)
vorgesehen ist und der Dichtring an dem Flüssigkeitsauslass befestigt ist; wobei an einem Ende der Reinigungspumpe ein Flüssigkeitseinlassstutzen angeordnet ist, der in die Dichtungsöffnung des Dichtrings eingesetzt ist, und wobei eine Stirnfläche der Reinigungspumpe an einer Oberfläche des Dichtrings anliegt, um die Reinigungspumpe axial zu positionieren;
**dadurch gekennzeichnet, dass**
an einem oberen Deckel der Reinigungspumpe ein elastisches Positionierelement (206) angeordnet ist; wobei in der Mitte der elastischen Positionierhülse eine dem elastischen Positionierelement entsprechende Positionieröffnung (305) vorgesehen ist,
sodass die elastische Positionierhülse an dem elastischen Positionierelement befestigt ist; wobei in der elastischen Positionierhülse (30) um die Positionieröffnung herum eine Mehrzahl von Schwingungsdämpfungsöffnungen (306)
beabstandet voneinander vorgesehen ist; wobei an der Unterseite der elastischen Positionierhülse ein Randabschnitt vorgesehen ist; und wobei die elastische Positionierhülse dazu ausgebildet ist, auf das elastische Positionierelement aufgesteckt zu werden, um an dem elastischen Positionierelement befestigt zu werden, und wobei die elastische Positionierhülse mit der Eingriffsnut in der Begrenzungsplatte in Eingriff steht, sodass der Randabschnitt durch die Unterseite der Begrenzungsplatte axial begrenzt ist und der Außenumfang der elastischen Positionierhülse mit einem an der Eingriffsnut vorgesehenen Eingriffsabschnitt in Eingriff steht, um die Reinigungspumpe zu fixieren.

2. Reinigungssystem für Fahrzeuge zur Schwingungsdämpfung und Geräuschminderung nach Anspruch 1, wobei die Eingriffsnut der Begrenzungsplatte eine Eingriffsaufnahme (105) und eine Mehrzahl von bogenförmigen Eingriffsabschnitten umfasst, die mit dem Außenumfang der elastischen Positionierhülse zusammenwirken, und wobei die Positionierhülse durch die bogenförmigen Eingriffsabschnitte radial begrenzt ist.

3. Reinigungssystem für Fahrzeuge zur Schwingungsdämpfung und Geräuschminderung nach Anspruch 1, wobei zwischen zwei benachbarten Eingriffsabschnitten der Begrenzungsplatte eine Schwingungsdämpfungsnut (103) vorgesehen ist und der Randbereich der Schwingungsdämpfungsnut nicht mit dem Außenumfang der Positionierhülse in Kontakt steht.

4. Reinigungssystem für Fahrzeuge zur Schwingungsdämpfung und Geräuschminderung nach Anspruch 2, wobei auf beiden Seiten der Eingriffsaufnahme jeweils eine Freisparung (107) vorgesehen ist.

5. Reinigungssystem für Fahrzeuge zur Schwingungsdämpfung und Geräuschminderung nach Anspruch 1, wobei in dem elastischen Positionierelement eine axial verlaufende Öffnungsnut (203) vorgesehen ist.

6. Reinigungssystem für Fahrzeuge zur Schwingungsdämpfung und Geräuschminderung nach Anspruch 1, wobei das elastische Positionierelement in seiner Mitte mit einer zylindrischen Öffnung (204) versehen ist.

7. Reinigungssystem für Fahrzeuge zur Schwingungsdämpfung und Geräuschminderung nach Anspruch 1, wobei das elastische Positionierelement zylindrisch ausgebildet ist und die elastische Positionierhülse zylindrisch ausgebildet ist.

8. Reinigungssystem für Fahrzeuge zur Schwingungsdämpfung und Geräuschminderung nach Anspruch 1, wobei an einem unteren Ende des elastischen Dichtrings im Bereich des Außenumfangs der Dichtungsöffnung ein erster ringförmiger Schwingungsdämpfungshohlraum (406) vorgesehen ist.

9. Reinigungssystem für Fahrzeuge zur Schwingungsdämpfung und Geräuschminderung nach Anspruch 1, wobei an einer Befestigungsfläche des elastischen Dichtrings im Bereich des Außenumfangs der Dichtungsöffnung ein zweiter ringförmiger Schwingungsdämpfungshohlraum (408) vorgesehen ist und in dem zweiten ringförmigen Schwingungsdämpfungshohlraum eine Mehrzahl von Schwingungsdämpfungsstreifen angeordnet ist.

10. Reinigungssystem für Fahrzeuge zur Schwingungsdämpfung und Geräuschminderung nach Anspruch 1, wobei der elastische Dichtring mit einer Ringnut (403) versehen ist und ein Rand des Flüssigkeitsauslasses zur Befestigung in der Ringnut verrastet ist.

## Revendications

1. Système de nettoyage utilisé pour des véhicules et capable de supprimer les vibrations et de réduire le bruit, comprenant un réservoir de liquide de nettoyage (10), une pompe de nettoyage (20), un manchon de positionnement élastique (30) et une bague d'étanchéité élastique (40), dans lequel une partie inférieure du réservoir de liquide de nettoyage est pourvue d'une sortie de liquide dirigée vers le haut ; une plaque de limitation (101) est prévue sur une surface latérale du réservoir de liquide de nettoyage, et ladite plaque de limitation est opposée à la sortie de liquide ; une fente d'engagement (108) est prévue dans ladite plaque de limitation ; un trou d'étanchéité (405) est prévu au centre de la bague d'étanchéité, et ladite bague d'étanchéité est fixée à la sortie de liquide ; une buse d'admission de liquide est disposée à une extrémité de la pompe de nettoyage et insérée dans ledit trou d'étanchéité de ladite bague d'étanchéité, une face d'extrémité de la pompe de nettoyage venant en butée contre une surface de ladite bague d'étanchéité pour positionner axialement la pompe de nettoyage ; le système étant en outre **caractérisé en ce qu'**il comprend un élément de positionnement élastique (206) disposé sur un couvercle supérieur de la pompe de nettoyage ; un trou de positionnement (305) qui correspond audit élément de positionnement élastique, est prévu au centre du manchon de positionnement élastique, de sorte que ledit manchon de positionnement élastique est fixé audit élément de positionnement élastique ; une pluralité de trous de suppression de vibrations (306) sont prévus à intervalles dans ledit manchon de positionnement élastique à la périphérie dudit trou de positionnement ; le fond dudit manchon de positionnement élastique est pourvu d'un bord ; et ledit manchon de positionnement élastique est configuré pour coiffer ledit élément de positionnement élastique, de manière à être fixé audit élément de positionnement élastique, et ledit manchon de positionnement élastique s'engage avec ladite fente d'engagement dans ladite plaque de limitation, de sorte que ledit bord est limité axialement par la surface inférieure de ladite plaque de limitation, et la périphérie extérieure dudit manchon de positionnement élastique s'engage avec une partie d'engagement sur ladite fente d'engagement, de manière à fixer la pompe de nettoyage.

2. Système de nettoyage utilisé pour des véhicules et capable de supprimer les vibrations et de réduire le bruit selon la revendication 1, **caractérisé en ce que** ladite fente d'engagement de ladite plaque de limitation comprend une douille d'engagement (105) et une pluralité de parties d'engagement en forme d'arc (104) qui coopèrent avec la périphérie extérieure dudit manchon de positionnement élastique, et ledit manchon de positionnement est limité radialement par lesdites parties d'engagement en forme d'arc.

3. Système de nettoyage utilisé pour des véhicules et capable de supprimer les vibrations et de réduire le bruit selon la revendication 1, **caractérisé en ce qu'**une fente de suppression de vibrations (103) est prévue entre deux parties d'engagement adjacentes de ladite plaque de limitation, et la périphérie de ladite fente de suppression de vibrations n'entre pas en contact avec la périphérie extérieure dudit manchon de positionnement.

4. Système de nettoyage utilisé pour des véhicules et capable de supprimer les vibrations et de réduire le bruit selon la revendication 2, **caractérisé en ce que** des fentes d'évitement (107) sont prévues respectivement sur les deux côtés de ladite douille d'engagement.

5. Système de nettoyage utilisé pour des véhicules et capable de supprimer les vibrations et de réduire le bruit selon la revendication 1, **caractérisé en ce qu'**une fente d'ouverture axiale (203) est prévue dans ledit élément de positionnement élastique.

6. Système de nettoyage utilisé pour des véhicules et capable de supprimer les vibrations et de réduire le bruit selon la revendication 1, **caractérisé en ce que** ledit élément de positionnement élastique est pourvu d'un trou cylindrique (204) en son centre.

7. Système de nettoyage utilisé pour des véhicules et capable de supprimer les vibrations et de réduire le bruit selon la revendication 1, **caractérisé en ce que** ledit élément de positionnement élastique est cylindrique, et ledit manchon de positionnement élastique est cylindrique.

8. Système de nettoyage utilisé pour des véhicules et capable de supprimer les vibrations et de réduire le bruit selon la revendication 1, **caractérisé en ce qu'**une première bague creuse de suppression de vibrations (406) est disposée sur la périphérie extérieure dudit trou d'étanchéité à une extrémité inférieure de ladite bague d'étanchéité élastique.

9. Système de nettoyage utilisé pour des véhicules et capable de supprimer les vibrations et de réduire le bruit selon la revendication 1, **caractérisé en ce qu'**une seconde bague creuse de suppression de vibrations (408) est disposée sur la périphérie extérieure dudit trou d'étanchéité à une surface de fixation de ladite bague d'étanchéité élastique, et une pluralité de bandes de suppression de vibrations (407) sont disposées dans ladite seconde bague creuse de suppression de vibrations.

10. Système de nettoyage utilisé pour des véhicules et capable de supprimer les vibrations et de réduire le bruit selon la revendication 1, **caractérisé en ce que** ladite bague d'étanchéité élastique est pourvue d'une rainure annulaire (403), et ladite rainure annulaire est encliquetée dans le bord de la sortie de liquide pour la fixation.
